(19) Europäisches Patentamt
European Patent Office
Office européen des brevets

(11) **EP 3 248 805 A1**

(12) **EUROPEAN PATENT APPLICATION**

(43) Date of publication:
**29.11.2017 Bulletin 2017/48**

(51) Int Cl.:
**B41M 1/30** (2006.01)      **B41M 5/00** (2006.01)
**B41J 11/00** (2006.01)      **B41F 23/00** (2006.01)

(21) Application number: **17172832.2**

(22) Date of filing: **24.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **27.05.2016 US 201615166860**

(71) Applicant: **Xerox Corporation
Rochester, NY 14644 (US)**

(72) Inventors:
• **YANG, Xin
  Webster, NY 14580 (US)**
• **MCCONVILLE, Paul J.
  Webster, NY 14580 (US)**
• **MOORE, Steven R.
  Pittsford, NY 14534 (US)**
• **FIORAVANTI, Alexander J.
  Penfield, NY 14526 (US)**
• **WILLIAMS, Vincent M.
  Palmyra, NY 14522 (US)**

(74) Representative: **Gill Jennings & Every LLP
The Broadgate Tower
20 Primrose Street
London EC2A 2ES (GB)**

(54) **REAL-TIME SURFACE ENERGY PRETREATMENT SYSTEM**

(57) A real-time surface energy treatment system (102) for a printable substrate including a surface energy modification device (60) arranged to alter a substrate surface energy of the printable substrate (106) to enhance wetting and adhesion of an ink to the printable substrate, a full width array sensor arranged to measure at least one print quality characteristic of the ink on the substrate, and a system control (118) in communication with the surface energy modification device and the full width array sensor and arranged to adjust an input power to the surface energy modification device based on the at least one print quality characteristic.

FIG. 2

# Description

## TECHNICAL FIELD

The presently disclosed embodiments are directed to providing a real-time controllable surface energy treatment system for a printable substrate and methods related to the same.

## BACKGROUND

A variety of digital print processes exist related to the production of packaging applications. Some applications require printing different functional inks on various media, *e.g.,* polyethylene terephthalate (PET), polyvinyl chloride (PVC), polycarbonate (PC) and polypropylene (PP). It has been found that incorporating surface energy pretreatment, *e.g.,* corona pretreatment, is necessary to control ink wetting on and adhesion to particular media types, and the pretreatment watt density (output power) plays a significant role in final image quality. However, different inks or media, and at times the same ink or media produced in different batches, show significant property variations, *e.g.,* color, wetting, adhesion, *etc.* Currently, achieving acceptable image quality requires offline measurements. A surface energy treatment power level for each ink-media combination is prepared and then studied offline before running a full print job. This process is time-consuming, requires significant amount of work and can result in operator errors.

The present disclosure addresses a system and method for providing real-time controllable surface treatment for printable substrates in combination with various inks. In short, the present system and method controls ink wetting on and adhesion to printable media and substrates in real-time.

## SUMMARY

Broadly, the present system and method use full width array sensors to capture printed images for automatically analyzing image qualities, in particular ink wetting on a substrate, and providing data to a control system which alters the power input to a surface energy treatment system, thereby optimizing image quality. Instead of manually studying the wetting properties and surface energy pretreatment level offline prior to printing, the present system enables the inline, real-time examination and auto-adjustment of surface energy pretreatment during printing, which reduces preparation time for printing. Moreover, when a new ink or media is used for printing, current printers require specialized experts to adjust the pretreatment and printing systems to achieve optimal image quality. With the present system and method, where the sensing, optimization and adjusting are all integrated within the system, printers run at optimal condition, even without comprehensive knowledge on wetting, surface energy treatment and image quality. Thus, the present system and method provide the real-time inspection and control of ink wetting properties on media, which minimizes image quality variation during printing.

Broadly, the system discussed *infra* provides a real-time surface energy treatment system for a printable substrate including a surface energy modification device arranged to alter a substrate surface energy of the printable substrate to enhance wetting and adhesion of an ink to the printable substrate, a full width array sensor arranged to measure at least one print quality characteristic of the ink on the substrate, and a system control in communication with the surface energy modification device and the full width array sensor and arranged to adjust an input power to the surface energy modification device based on the at least one print quality characteristic.

According to aspects illustrated herein, there is provided a method of providing real-time monitoring of surface energy treatment of a printable substrate including: a) modifying a surface energy of the printable substrate with a surface energy modification device; b) depositing an ink on a portion of the substrate to form a printed image; c) curing the printed image; d) measuring at least one print quality characteristic of the printed image with a full width array sensor; and, e) adjusting an input power of the surface energy modification device based on the at least one print quality characteristic

Other objects, features and advantages of one or more embodiments will be readily appreciable from the following detailed description and from the accompanying drawings and claims.

## BRIEF DESCRIPTION OF THE DRAWINGS

Various embodiments are disclosed, by way of example only, with reference to the accompanying drawings in which corresponding reference symbols indicate corresponding parts, in which:

> Figure 1 a schematic diagram of an embodiment of a present system for printing stretchable ink on a thermoformable substrate;
> Figure 2 is a schematic diagram of an embodiment of a presenting printing system including real-time controllable surface energy treatment of a printable substrate;
> Figure 3 is a cross sectional view depicting the interaction of a stretchable ink with a thermoformable substrate having a low surface energy;
> Figure 4 is a cross sectional view depicting the interaction of a stretchable ink with a thermoformable substrate having a surface energy higher than the surface energy depicted in Figure 2;
> Figure 5 is an example of a single pixel width line printed on a substrate having a low surface energy;
> Figure 6 is an example of a single pixel width line printed on a substrate having a surface energy higher than the surface energy of the substrate depicted in Figure 5;

Figure 7 is an example graph plotting single pixel printed line width relative to watt density of the substrate imparted by the surface treatment device;

Figure 8 is an example graph plotting single pixel printed line width standard deviation relative to watt density of the substrate imparted by the surface treatment device; and,

Figure 9 is a flow chart depicting the control loop for inspecting a printed imaged and in turn adjusting the surface energy treatment device.

## DETAILED DESCRIPTION

At the outset, it should be appreciated that like drawing numbers on different drawing views identify identical, or functionally similar, structural elements of the embodiments set forth herein. Furthermore, it is understood that these embodiments are not limited to the particular methodologies, materials and modifications described and as such may, of course, vary. It is also understood that the terminology used herein is for the purpose of describing particular aspects only, and is not intended to limit the scope of the disclosed embodiments, which are limited only by the appended claims.

Unless defined otherwise, all technical and scientific terms used herein have the same meaning as commonly understood to one of ordinary skill in the art to which these embodiments belong. As used herein, "full width", *e.g.,* "full width array sensor" and "full width printhead array", is intended to be broadly construed as any structure that covers a significant width of the substrate. For example, in some embodiments, the length of a full width array sensor is approximately half of the width of the substrate which it inspects.

Furthermore, the words "printer," "printer system", "printing system", "printer device" and "printing device" as used herein encompass any apparatus, such as a digital copier, bookmaking machine, facsimile machine, multi-function machine, *etc.* which performs a print outputting function for any purpose. Additionally, as used herein, "web", "substrate", "printable substrate" refer to, for example, paper, transparencies, parchment, film, fabric, plastic, photo-finishing papers or other coated or noncoated substrate media in the form of a web upon which information or markings can be visualized and/or reproduced, while a "thermoformable substrate" is intended to mean any substrate capable of being thermoformed after printing, *i.e.,* capable of being shaped by the use of heat and pressure. "Process direction", as used herein is intended to mean the direction of travel of the substrate through the printer system. As used herein, the term 'average' shall be construed broadly to include any calculation in which a result datum or decision is obtained based on a plurality of input data, which can include but is not limited to, weighted averages, yes or no decisions based on rolling inputs, etc.

Moreover, as used herein, the phrases "comprises at least one of" and "comprising at least one of" in combination with a system or element is intended to mean that the system or element includes one or more of the elements listed after the phrase. For example, a device comprising at least one of: a first element; a second element; and, a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element. A similar interpretation is intended when the phrase "used in at least one of:" is used herein. Furthermore, as used herein, "and/or" is intended to mean a grammatical conjunction used to indicate that one or more of the elements or conditions recited may be included or occur. For example, a device comprising a first element, a second element and/or a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element.

Moreover, although any methods, devices or materials similar or equivalent to those described herein can be used in the practice or testing of these embodiments, some embodiments of methods, devices, and materials are now described.

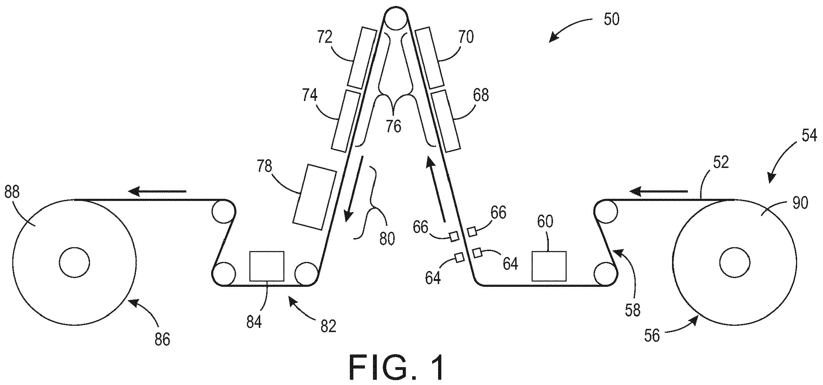

Figure 1 depicts a schematic view of an embodiment of a present printing system, *i.e.,* printing system **50**. Thermoforming grade substrate **52**, *e.g.,* polyethylene terephthalate (PET) or polyvinyl chloride (PVC), is unwound at first end **54** of system **50** in unwinder **56**. Web **52** then passes through a conventional web drive and steering subsystem, *i.e.,* subsystem **58**. Web **52** is exposed to surface energy modification device **60**, *e.g.,* corona discharge, atmospheric plasma, or flame treatment. Surface energy modification device **60** enhances both the wetting and adhesion of ink **62** to web **52**. An example of a suitable surface energy modification device is a corona treatment device from Enercon of Milwaukee, Wisconsin with a typical output power of 0 - 100

$$0 - 100 \ \frac{W \cdot \min}{m^2}.$$ In some embodiments, printing m system **50** may also include web cleaning stations **64** and static neutralization devices **66** to remove excess particles and static charge from the substrate. In some embodiments, stations **64** and devices **66** are located on both sides of web **52** between surface energy modification device **60** and printhead array **68**. Web **52** then passes by one or more printhead arrays, e.g., printhead arrays **68, 70, 72** and **74.** In some embodiments, each printhead array is composed of multiple piezo printheads arranged so that the full width of web **52,** other than inboard and outboard margins, can be addressed by at least one printhead without the need to move or scan the printhead. The foregoing arrangement of printheads allows for a 'single pass' print mode in which web **52** moves continuously through print zone **76,** i.e., the area where web **52** passes adjacent to printhead arrays **68, 70, 72** and **74.** It has been found that the foregoing embodiments can print over a speed range of 30-120 feet per minute. The full width printhead arrays of system **50** are stationary, i.e., not scanning transversely across web **52,** which enables much higher printing throughput than conventional printers.

Figure 1 shows one printhead array for each of the four conventional colors, i.e., cyan, magenta, yellow and black, also commonly referred to as CMYK. The four printhead arrays are represented by arrays **68, 70, 72** and **74** for the CMYK colors, respectively. An additional array or a plurality of additional arrays can be included for a fifth color, e.g., white, or for a plurality of additional colors. The printhead arrays are responsible for adding digitally defined image content to substrate **52,** such as package graphics, instructions, and the like. The printhead arrays may also print non-image marks such as registration marks for subsequent thermoform processing, cutting operations, or other post printing processes that require alignment to the printed image.

It should be appreciated that corresponding ink delivery subsystems for each printhead array are not shown in the figures or discussed in detail herein as such subsystems are generally known in the art of liquid and solid ink printing. Each ink delivery subsystem supplies its corresponding printhead array with a radiation-curable thermoforming ink. It has been found that suitable inks should be formulated to allow for stretching of at least 400% elongation without cracking or losing adhesion to the substrate. However, the extent of necessary stretching is dependent on the thermoforming process and inks providing less than 400% elongation without cracking or loss of adhesion to the substrate may also be suitable for some applications.

After all ink has been deposited onto the substrate, the web then passes through a radiation curing zone, where such radiation source is selected based on the requirements for fully curing the ink. In some embodiments, multiple wide spectrum UV lamps provide curing of the inks, although other devices such as UV spectrum LED arrays may also be used, i.e., the necessary radiation output is dependent on the curing requirements of the ink. Thus, radiation curing device **78** may be selected from the group consisting of: an ultraviolet radiation source; an infrared radiation source; a visible light radiation source; and, combinations thereof, depending on the requirements of the stretchable ink. After web **52** passes through curing zone **80** it passes through sensing subsystem **82** which can be used to detect color-to-color registration, missing jets, and other print quality metrics. In some embodiments, sensing subsystem **82** comprises full width array sensor **84.** Web **52** then passes into rewinder **86** where printed web **52** is returned to a roll form, e.g., roll **88.** Printed roll **88** can be used in a thermoforming press and thereby converted into thermoformed objects, e.g., food packaging containers.

In some embodiments, web substrate **52** is 0.014 inch thick thermoforming grade PET, although other thermoformable plastics may also be used. In some embodiments, print resolution of 600 dots per inch (dpi) x 600 dpi is acceptable, although other print modes may be used, e.g., 300 dpi x 300 dpi.

In view of the foregoing, it should be appreciated that system **50** is capable of printing at least one stretchable ink on a thermoformable substrate, e.g., substrate **52.** In some embodiments, system **50** comprises unwinder **56,** surface energy modification device **60,** at least one full width printhead array, e.g., printhead arrays **68, 70, 72** and **74,** at least one radiation curing device, e.g., curing device **78,** full width array sensor **84** and rewinder **86.** Unwinder **56** is arranged to feed thermoformable substrate **52** from first roll **90** into web drive subsystem **58.** Surface energy modification device **60** is arranged to alter a substrate surface energy to enhance wetting and adhesion of the at least one stretchable ink to thermoformable substrate **52.** The full width printhead arrays are arranged to deposit the at least one stretchable ink on thermoformable substrate **52.** Radiation curing device **78** is arranged to cure the at least one stretchable ink on thermoformable substrate **52.** Full width array sensor **84** is arranged to monitor the at least one stretchable ink on thermoformable substrate **52,** and rewinder **86** is arranged to receive thermoformable substrate **52** and to form thermoformable substrate **52** into second roll **88.**

In some embodiments, each of the at least one stretchable ink is an ultraviolet radiation curable ink; however, other types of inks may also be used. Moreover, in some embodiments, thermoformable substrate **52** is selected from the group consisting of: polyethylene terephthalate; polyethylene terephthalate glycol-modified; polycarbonate; acrylic; polyvinyl chloride; acrylonitrile butadiene styrene; polypropylene; and, combinations thereof.

As described above, surface energy modification may be provided by a variety of devices. In some embodiments, surface energy modification device **60** is selected from the group consisting of: a corona treatment station; an atmospheric plasma treatment station; a flame treatment station; and, combinations thereof. In some embodiments, thermoformable substrate **52** comprises a first width and surface energy modification device **60** comprises a second width/length greater than the first width. Depending on system and printing requirements, it is also within the scope of the claims to have a surface energy modification device that is smaller/shorter than the width of thermoformable or printable substrate **52.**

Similarly, in some embodiments, each full width printhead array dispenses a unique stretchable ink. In other terms, each full width printhead array dispenses a particular color unique to that printhead array. Thus, a first full width printhead array **68** may dispense cyan ink, while a second printhead array **70** dispenses magenta ink, a third printhead array **72** dispenses yellow ink, and a fourth printhead array **74** dispenses black ink. In some embodiments, thermoformable substrate **52** comprises a first width and the at least one full width printhead array, *e.g.,* arrays **68, 70, 72** and/or **74,** comprises a second width/length less than the first width. Depending on system and printing requirements, it is also within the scope of the claims to have printhead arrays that are equal to or greater than the width of the thermoformable or printable substrate. However, in embodiments having printhead arrays with widths/lengths greater than that of the thermoformable substrate, some piezo printheads must be turned off, *i.e.,* the printheads falling outside of the substrate, to avoid waste of ink or damage to the overall system.

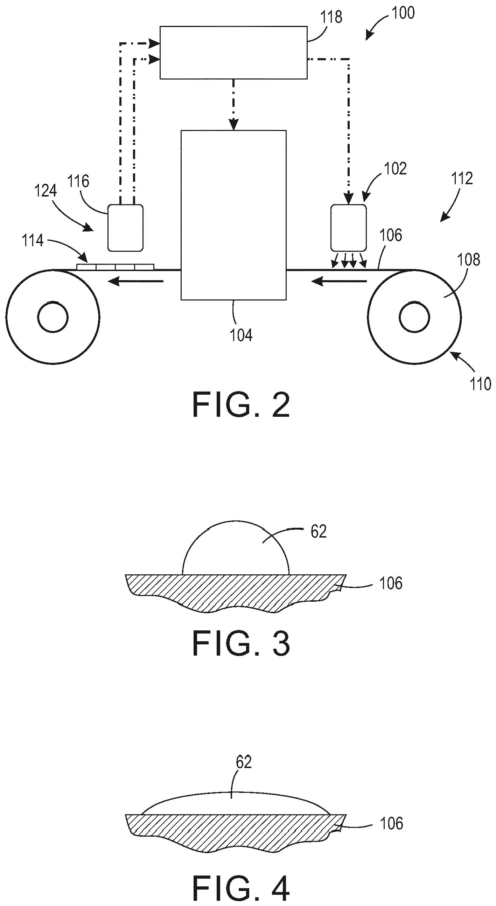

Figure 2 depicts a schematic diagram of an embodiment of a presenting printing system including real-time controllable surface treatment of a printable substrate, *i.e.,* printing system **100.** Figure 2 depicts a schematic overview of an embodiment of printing system **100** which comprises real-time auto-adjusting surface energy treatment system **102** and a portion of printer **50** depicted as a single box, *i.e.,* box **104.** The portion of printer **50** included within box **104** comprises the elements shown in Figure 1 except rolls **88** and **90,** surface energy modification device **60** and sensing subsystem **82,** as those elements, or equivalents thereto, are shown in Figure 2 separately. Media/substrate **106** is unwounded from roll **108** by unwinder **110** at first end **112** of system **100.** Substrate **106** is then pretreated by surface energy modification device **102,** *e.g.,* a corona treatment unit. Printer **100** deposits and cures image **114** on substrate **106,** and then image **114** is scanned by full width array sensor **116.** The information obtained by sensor **116** is sent back to system control **118** for analysis and optimization determination. It should be appreciated that system control **118** may be a conventional computer with special programming for receipt and handling of image scan data, or system control **118** may be programmed controller hardware configured to do the same. The type of data obtained and considerations upon receipt of the same are discussed in greater detail below.

In conventional printers, the optimized signal is sent to the print engine, *e.g.,* printer **50,** to control the printhead arrays for improving image qualities. However, conventional printers do not actively control ink wetting properties on media. It has been found that ink wetting properties on media typically play significant roles when printing on plastics, *e.g.,* printing packaging materials. While the surface energy level (watt density) of the media/substrate is pre-set for a specific ink-media combination, any variation in media or ink will require adjustment to the surface energy treatment. As described above, conventional printers require significant amount of work from professionals to update the pretreatment parameters, which is very time-consuming and inconvenient.

Printing system **100** improves the productivity and automation of printer **50** by actively analyzing ink wetting properties on a surface energy treated substrate with images captured by a full width array sensor. Upon inspection of image **114** by full width array sensor **116,** data regarding that inspection is provided to system control **118.** System control **118** then analyzes the inspection data and based on that analysis adjusts the power input to surface energy modification device **102,** which in turn adjusts the pretreatment energy level for optimal ink wetting on substrate **106.**

In view of the foregoing, it should be appreciated that the present real-time surface treatment system for a printable substrate, *e.g.,* system **100,** comprises surface energy modification device **102,** full width array sensor **116** and system control **118.** Surface energy modification device **102** is arranged to alter a substrate surface energy of printable substrate **106** to enhance wetting and adhesion of ink **62** to printable substrate **106.** Full width array sensor **116** is arranged to measure at least one print quality characteristic of ink **62** on substrate **106.** System control **118** is in communication with surface energy modification device **102** and full width array sensor **116** and is arranged to adjust an input power to surface energy modification device **102** based on the at least one print quality characteristic. In some embodiments, the at least one print quality characteristic is selected from the group consisting of: line width; line width standard deviation; and, combinations thereof.

Figure 3 depicts a cross sectional view showing the interaction of stretchable ink **62** with thermoformable substrate **52** having a low surface energy, while Figure 4 depicts a cross sectional view showing the interaction of stretchable ink **62** with thermoformable substrate **52** having a surface energy higher than the surface energy depicted in Figure 3. Surface energy modification, *e.g.,* corona treatment, increases the surface energy of a printable substrate to improve wettability and adhesion of inks and coatings. Some printable substrates, *e.g.,* polymer films, have chemically inert and non-porous surfaces with low surface tensions that cause poor reception of printing inks and coatings. Surface tensions are indicative of surface energy which is also commonly referred to as dyne level. Surface treatment, such as corona treatment, increases the surface energy of the printable substrate, thereby improving print quality through improved wettability and adhesion of inks. Generally, it is believed that a substrate will be wetted if its surface energy is higher than the surface energy of the ink. The level of surface energy modification depends on a variety of factors, including but not limited to the type of treatment used, the substrate and the ink characteristics. Thus, the required intensity of treatment, *i.e.,* the number of watts per minute per substrate surface area $\left( \dfrac{W \cdot \min}{m^2} \right)$, is best determined for each combination of substrate and ink. The same determination should be made when using different production runs of the same substrate and/or ink to achieve optimal printing results.

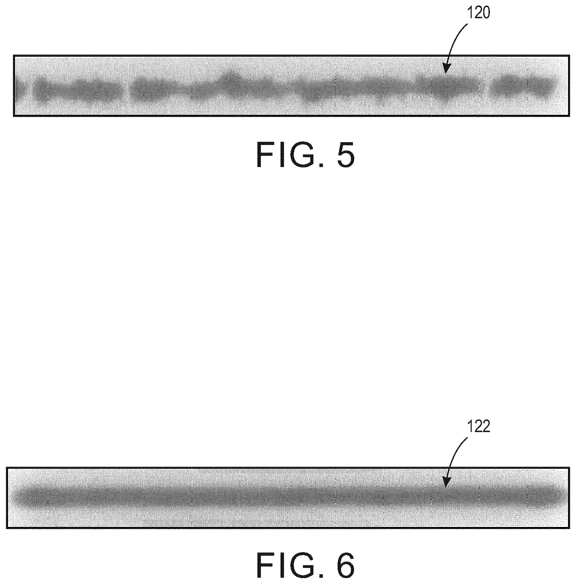

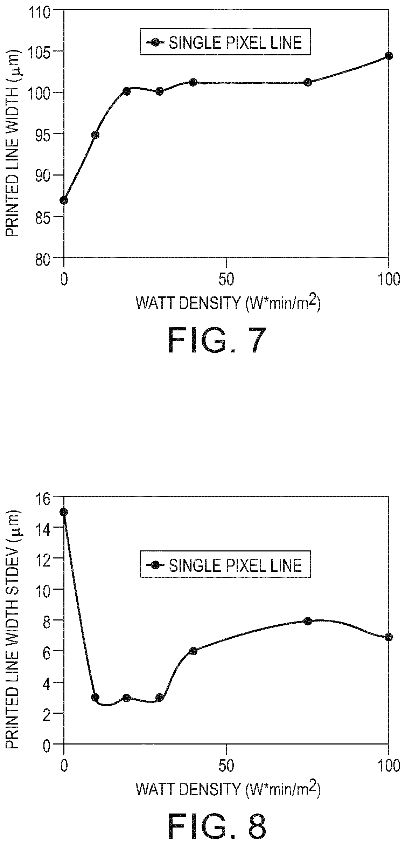

It has been found that the wetting of ink **62** on media/substrate **106** plays a significant role in printed image quality. In some embodiments, the performance of ink wetting on media is evaluated by printing a line having a single pixel process direction width. Printing performance is quantified using a measurement of printed line width and printed line width standard deviation (STDEV) as shown in Figures 5-8. It should be appreciated that line width refers to the size of the measured line in the process direction. Figures 5 and 6 depict a comparison of different line qualities obtained at two different surface energy levels, *i.e.,* Figure 5 is a relatively lower surface energy level and Figure 6 is a relatively higher surface energy level. It has been found that good image quality is achieved when ink **62** spreads to a relatively large printed line width, *e.g.,* approximately 100 μm, with a relatively small printed line width STDEV, *e.g.,* approximately 3 μm. An example of quantifying an ink/substrate combination is shown in Figures 7 and 8, *i.e.,* Figure 7 shows a sweep of surface energy levels versus printed line width and Figure 8 shows a sweep of surface energy levels versus printed line width STDEV. Corona pretreatment, as well as other types of surface energy modification treatments, is an effective method to control ink wetting on various media. As can be seen in Figures 7 and 8, the energy level of the corona treater greatly influences the wetting performance. The printed line width increases with increasing corona watt density, but the minimal printed line width STDEV could only be obtained between

$10 - 30 \ \dfrac{W \cdot \min}{m^2}$. Both increasing and decreasing the watt density above and below the foregoing range increases the printed line width STDEV, which in turn decreases the quality of the printed image.

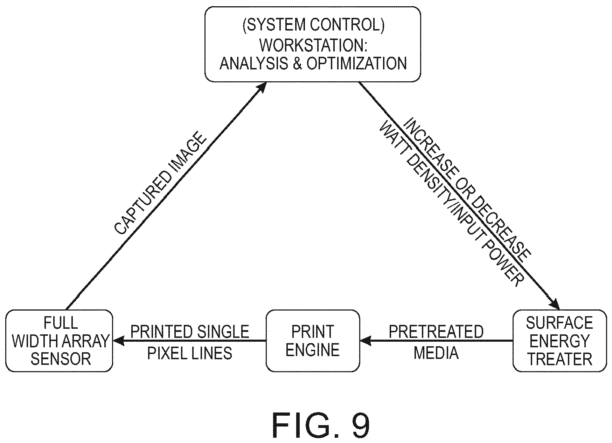

The presently described real-time auto-adjusting control for surface energy pretreatment improves average line width, while keeping the line width STDEV at low levels. An embodiment of the proposed control system is shown in Figure 9. Media **106** is treated with surface energy modification device **102,** and then is transported to the print engine where media **106** is printed with single pixel lines, *e.g.,* lines **120** and **122.** Lines **120** and **122** are captured by sensing subsystem **124** via full width array sensor **116.** Sensing subsystem **124** sends images of lines **120** and **122** to system control **118** for analyzing line width and line width STDEV. System control **118** optimizes the performance of printing system **100** based on the analysis results, *i.e.,* system control **118** increases or decreases the watt density output from surface energy modification device **102** by increasing or decreasing the input power provided to surface energy modification device **102.** With this close-loop control, optimal ink wetting in printing system **100** is obtained in a real-time and auto-adjusting manner.

In view of the foregoing, it should be appreciated that some embodiments of the present method for real-time monitoring of surface energy treatment of a printable substrate comprises the following steps. First, the surface energy of printable substrate **106** is modified with surface energy modification device **102.** Then ink **62** is deposited on a portion of substrate **106** to form printed image **114,** *e.g.,* line **120.** Printed image **114** is cured, and at least one print quality characteristic of printed image **114** is measured with full width array sensor **116.** In response to that results of that measurement, an input power of surface energy modification device **102** is adjusted via system control **118** based on the at least one print quality characteristic. The foregoing steps may be repeated until the optimum power input for surface energy modification device **102** is determined.

The present system and method for automated adjustment of media ink wetting by real-time control of surface energy pretreatment in response to feedback of printed images is disclosed above. Although surface energy pretreatment for improved wettability by changing surface energy is understood in the field of art, real-time control based on image feedback has not been contemplated or provided. The present system and method use measurements of printed line width and printed line width standard deviation to characterize wettability of ink-media combinations.

Some of the benefits of the present system and method include that the setup time of manually adjusting surface energy pre-treatment levels is greatly reduced. Additionally, the present system and method improves quality by correcting for changes in material properties throughout a printing run due to manufacturing deviations or environmental changes, *i.e.,* adjustments are made in real-time throughout a printing run.

It will be appreciated that various of the above-disclosed and other features and functions, or alternatives thereof, may be desirably combined into many other different systems or applications. Various presently unforeseen or unanticipated alternatives, modifications, variations or improvements therein may be subsequently made by those skilled in the art which are also intended to be encompassed by the following claims.

**Claims**

1. A real-time surface energy treatment system for a printable substrate comprising:

   a surface energy modification device arranged to alter a substrate surface energy of the printable substrate to enhance wetting and adhesion of an ink to the printable substrate;

a full width array sensor arranged to measure at least one print quality characteristic of the ink on the substrate; and,

a system control in communication with the surface energy modification device and the full width array sensor and arranged to adjust an input power to the surface energy modification device based on the at least one print quality characteristic.

2. The real-time surface energy treatment system for a printable substrate of Claim 1 wherein the at least one print quality characteristic is selected from the group consisting of:

line width; line width standard deviation; and, combinations thereof.

3. The real-time surface energy treatment system for a printable substrate of Claim 1 wherein the ink is a stretchable ink.

4. The real-time surface energy treatment system for a printable substrate of Claim 3 wherein the stretchable ink is an ultraviolet radiation curable ink.

5. The real-time surface energy treatment system for a printable substrate of Claim 1 wherein the substrate is a thermoformable substrate.

6. A method for real-time monitoring of surface energy treatment of a printable substrate comprising:

a) modifying a surface energy of the printable substrate with a surface energy modification device;
b) depositing an ink on a portion of the substrate to form a printed image;
c) curing the printed image;
d) measuring at least one print quality characteristic of the printed image with a full width array sensor; and,
e) adjusting an input power of the surface energy modification device based on the at least one print quality characteristic.

7. The method for real-time monitoring of surface energy treatment of a printable substrate of Claim 6 wherein the at least one print quality characteristic is selected from the group consisting of: line width; line width standard deviation; and, combinations thereof.

8. The method for real-time monitoring of surface energy treatment of a printable substrate of Claim 6 wherein the ink is a stretchable ink.

9. The method for real-time monitoring of surface energy treatment of a printable substrate of Claim 8 wherein the stretchable ink is an ultraviolet radiation curable ink.

10. The method for real-time monitoring of surface energy treatment of a printable substrate of Claim 6 wherein the substrate is a thermoformable substrate.

FIG. 1

FIG. 2

FIG. 3

FIG. 4

120

FIG. 5

122

FIG. 6

FIG. 7

FIG. 8

FIG. 9

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/082604 A1 (FLORENCE RICHARD N [US] ET AL) 20 April 2006 (2006-04-20) * paragraph [0007] - paragraph [0041]; claims 1,7,8,10; figure 1 * | 1-10 | INV. B41M1/30 B41M5/00 B41J11/00 B41F23/00 |
| X | US 2015/062237 A1 (KONDO TAKAMITSU [JP] ET AL) 5 March 2015 (2015-03-05) * paragraph [0007] - paragraph [0083]; claim 1; figure 1 * | 1-10 | |
| X | EP 2 743 090 A1 (RICOH CO LTD [JP]) 18 June 2014 (2014-06-18) * paragraph [0044] - paragraph [0091]; claims 1,2; figures 2-24 * | 1-10 | |
| X A | US 2015/258811 A1 (HIRATSUKA HIROYUKI [JP] ET AL) 17 September 2015 (2015-09-17) * paragraphs [0009], [0049] - paragraph [0162]; figures 1-37 * | 1,2,5-7, 10 3,4,8,9 | |
| A | US 2004/017075 A1 (KNOERZER ANTHONY ROBERT [US] ET AL) 29 January 2004 (2004-01-29) * paragraphs [0005], [0015] - paragraph [0038] * | 1-10 | TECHNICAL FIELDS SEARCHED (IPC) B41M B41J B41F |
| A | US 2015/273873 A1 (KITADA KENJI [JP] ET AL) 1 October 2015 (2015-10-01) * paragraph [0008] - paragraphs [0019], [0032], [0035] * | 1-10 | |

The present search report has been drawn up for all claims

| Place of search | Date of completion of the search | Examiner |
|---|---|---|
| Munich | 18 October 2017 | Patosuo, Susanna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 2832

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2017

| Patent document cited in search report | | Publication date | Patent family member(s) | | Publication date |
|---|---|---|---|---|---|
| US 2006082604 | A1 | 20-04-2006 | NONE | | |
| US 2015062237 | A1 | 05-03-2015 | CN | 104417047 A | 18-03-2015 |
| | | | JP | 2015051504 A | 19-03-2015 |
| | | | US | 2015062237 A1 | 05-03-2015 |
| EP 2743090 | A1 | 18-06-2014 | EP | 2743090 A1 | 18-06-2014 |
| | | | JP | 2014133406 A | 24-07-2014 |
| | | | US | 2014160197 A1 | 12-06-2014 |
| US 2015258811 | A1 | 17-09-2015 | JP | 2015186911 A | 29-10-2015 |
| | | | US | 2015258811 A1 | 17-09-2015 |
| US 2004017075 | A1 | 29-01-2004 | NONE | | |
| US 2015273873 | A1 | 01-10-2015 | JP | 2015196328 A | 09-11-2015 |
| | | | US | 2015273873 A1 | 01-10-2015 |

EPO FORM P0459

For more details about this annex : see Official Journal of the European Patent Office, No. 12/82